# EUROPÄISCHE PATENTSCHRIFT

(11) **EP 3 139 095 B1**
(45) Veröffentlichungstag und Bekanntmachung des Hinweises auf die Patenterteilung: **26.02.2020**
(21) Anmeldenummer: 16186197.6
(22) Anmeldetag: 30.08.2016
(51) Int. Cl.: F24C 3/12

(54) **HAUSHALTSGERÄT UND VERFAHREN ZUM BETREIBEN EINES HAUSHALTSGERÄTS**
DOMESTIC APPLIANCE AND METHOD FOR OPERATING SAME
APPAREIL MÉNAGER ET PROCÉDÉ DE FONCTIONNEMENT D'UN APPAREIL MÉNAGER

(30) Priorität: 01.09.2015 ES 201531244
(43) Veröffentlichungstag der Anmeldung: 08.03.2017
(73) Patentinhaber: BSH Hausgeräte GmbH, 81739 München (DE)
(72) Erfinder: Palacios Valdueza, Luis Antonio, 39610 Astillero (ES); Peña Martín, Oscar, 39478 Boo de Pielagos (ES); Placer Maruri, Emilio, 39120 Liencres (ES); Rivera Peman, Julio, 50410 Cuarte de Huerva (Zaragoza) (ES); Saiz Gonzalez, Roberto, 39539 Villapresente Cantabria (ES)

(56) Entgegenhaltungen:
- EP-A2- 2 327 931
- WO-A1-2004/018942
- WO-A2-01/69340
- GB-A- 2 202 952
- US-A1- 2009 053 662
- US-A1- 2009 205 632

## Beschreibung

Die vorliegende Erfindung betrifft ein Haushaltsgerät, insbesondere ein Gaskochfeld, und ein Verfahren zum Betreiben eines Haushaltsgeräts.

Ein Haushaltsgerät bezieht sich insbesondere auf ein Gaskochfeld zum Erwärmen von Gargut, z.B. Lebensmittel. Das Haushaltsgerät kann insbesondere eine oder mehrere Flammen mit Hilfe eines Brenngases erzeugen. Dabei kann dem Brenngas Sauerstoff, z.B. aus der Umgebungsluft, beigemischt werden, um ein entflammbares Gasgemisch zu erzeugen, welches entzündet wird.

Eine Gasversorgung versorgt das Haushaltsgerät mit dem Brenngas. Die Gasversorgung kann als ein Gasbehälter, insbesondere eine Gasflasche, ausgebildet sein, der das Brenngas unter einem gegenüber einem Atmosphärendruck der Umgebungsluft erhöhten Druck aufbewahrt. Vorzugsweise ist ein Druckminderer zwischen dem Gasbehälter und dem Haushaltsgerät geschaltet, um den Druck des dem Haushaltsgerät zugeführten Brenngases auf einen einstellbaren Wert zu beschränken.

Durch Verbrauch des Brenngases sinkt der Druck des Brenngases im Gasbehälter und des dem Haushaltsgerät zugeführten Brenngases. Wenn der Druck im Gasbehälter gleich dem Atmosphärendruck ist, kann kein Brenngas mehr aus dem Gasbehälter austreten und das Haushaltsgerät kann nicht betrieben werden. Eine derartige Unterbrechung ist oftmals nicht vorhersehbar und unerwünscht.

Dokument WO 2004/018942 A1 beschreibt ein Gaskochgerät mit einer Anzeigeeinrichtung, die in Signalverbindung mit einem Drucksensor, einem Gewichtssensor oder einem Sensor zur Messung des Gasfüllstands ist.

Vor diesem Hintergrund besteht eine Aufgabe der vorliegenden Erfindung darin, ein verbessertes Haushaltsgerät, insbesondere ein verbessertes Gaskochfeld, bereitzustellen.

Demgemäß wird ein Haushaltsgerät mit den Merkmalen des Anspruchs 1, insbesondere ein Gaskochfeld, vorgeschlagen.

Unter Erwärmen von Gargut wird allgemein eine Temperaturerhöhung des Garguts verstanden. Erwärmen kann zum Beispiel Wärmen, Erhitzen, Kochen, Garen und/oder Auftauen des Garguts beinhalten. Das Gargut bezieht sich insbesondere auf Lebensmittel.

Das Brenngas kann beispielsweise Butan, Propan und/oder Erdgas enthalten. Das Brenngas kann insbesondere geeignet sein, mit Sauerstoff oder Umgebungsluft vermischt zu werden, um ein entflammbares Gasgemisch zu erzeugen. Das entflammbare Gasgemisch kann mit Hilfe einer Zündeinrichtung der mindestens einen Gaskochstelle entzündet werden, um eine oder mehrere Flammen zu erzeugen. Die Gaskochstelle kann das Gargut mit Hilfe der Flammen erwärmen.

Die Gasleitung ist vorzugsweise als eine Rohrleitung mit einem kreisförmigen oder mehreckigen Querschnitt ausgebildet. Die Gasleitung kann zumindest teilweise aus einem Plastik oder einem Metall ausgebildet sein. Insbesondere kann die Gasleitung eine Hauptgasleitung und eine oder mehrere Gaszuleitungen aufweisen. Die Hauptgasleitung führt das Brenngas dem Haushaltsgerät zu und/oder stellt das Brenngas dem Haushaltsgerät bereit. Die Gaszuleitungen führen das dem Haushaltsgerät zugeführte Brenngas, insbesondere von der Hauptgasleitung, der mindestens einen Gaskochstelle zu.

Das Haushaltsgerät kann mehrere Gaskochstellen aufweisen, und mehrere Gaszuleitungen können jeweils eine Gaskochstelle mit der Hauptgasleitung verbinden, so dass das Brenngas aus der Hauptgasleitung zu den jeweiligen Gaskochstellen fließen kann. Vorzugsweise ist zwischen der Hauptgasleitung und der Gaszuleitung jeweils ein Ventil vorgesehen, das eine Flussmenge des Brenngases zu der zugehörigen Gaskochstelle regeln kann. Vorzugsweise ist das Ventil mit einem Bedienelement, z.B. einem Bedienknebel, verbunden, das einer das Haushaltsgerät bedienenden Person eine manuelle Kontrolle der Flussmenge ermöglicht, um eine Heizleistung der zugehörigen Gaskochstelle zu steuern.

Das Druckmessgerät kann den Druck des Brenngases in der Gasleitung, insbesondere in der Hauptgasleitung, messen oder erfassen. Das Druckmessgerät kann den Druck analog und/oder digital messen. Eine digitale Druckmessung erfolgt beispielsweise durch einen elektronischen Drucksensor. Der elektronische Drucksensor oder eine Steuereinrichtung kann elektrische Signale in Abhängigkeit vom dem gemessenen Druck des Brenngases in der Gasleitung erzeugen. Bei einer analogen Druckmessung kann eine Druckmesseinheit in Abhängigkeit des Drucks des Brenngases in der Gasleitung verformt, ausgelenkt oder aus einer Ruheposition gebracht werden. Derartige Zustandsänderungen können an eine Steuereinheit weitergeleitet werden.

Mit Hilfe des vorgeschlagenen Haushaltsgeräts kann eine das Haushaltsgerät bedienende Person über einen Füllstand des Gasbehälters, z.B. der Gasflasche, informiert werden. Insbesondere kann ein niedriger Füllstand des Gasbehälters vorhergesehen werden, und dadurch ein rechtzeitiger Austausch des Gasbehälters möglich sein.

Gemäß einer Ausführungsform umfasst das Haushaltsgerät einen Anschluss und eine Ventileinrichtung. Der Gasanschluss ist zum Zuführen des Brenngases zum Haushaltsgerät eingerichtet. Die Ventileinrichtung ist zum Steuern einer Zufuhr des Brenngases zu der mindestens einen Gaskochstelle eingerichtet. Das Druckmessgerät ist zum Messen des Drucks in der Gasleitung zwischen dem Gasanschluss und der Ventileinrichtung eingerichtet.

Der Gasanschluss kann eine Öffnung am Haushaltsgerät umfassen. Der Gasanschluss kann ein Einfließen des Brenngases in das Haushaltsgerät ermöglichen. Vorzugsweise ist die Gasleitung, insbesondere die Hauptgasleitung, an den Gasanschluss angeschlossen. Ferner kann der Gasanschluss an einen externen Gasbehälter, insbesondere eine Gasflasche, angeschlossen sein, so dass das Brenngas aus dem Gasbehälter in die Gasleitung des Haushaltsgeräts fließen kann. Vorzugsweise ist der Gasanschluss eingerichtet, die Gasleitung des Haushaltsgeräts und eine Gasleitung, die mit dem Gasbehälter verbunden ist, luftdicht miteinander zu verbinden.

Die Ventileinrichtung kann eine oder mehrere Regelventile zum Sperren oder Durchlassen eines Gasflusses des Brenngases zu der mindestens einen Gaskochstelle umfassen. Vorzugsweise kann die Ventileinrichtung den Gasfluss des Brenngases zu der mindestens einen Gaskochstelle stufenweise und/oder kontinuierlich verringern oder erhöhen. Vorzugsweise ist die Ventileinrichtung mit einem oder mehreren Bedienelementen, z.B. einem Bedienknebel, einem Schieberegler einer Tastatur, verbunden, um ein manuelles Steuern der Ventileinrichtung durch eine das Haushaltsgerät bedienende Person zu ermöglichen. Eine Heizleistung an der mindestens einen Gaskochstelle könnte durch die Flussmenge des Brenngases zu der jeweiligen Gaskochstelle bestimmt sein.

Das Druckmessgerät erfasst den Druck des Brenngases in der Gasleitung abströmseitig von dem Gasanschluss und anströmseitig von der Ventileinrichtung. Insbesondere ist das Druckmessgerät an der Hauptgasleitung des Haushaltsgeräts angeordnet, um den Druck des dem Haushaltsgerät zugeführten Brenngases in der Hauptgasleitung zu erfassen. Folglich erfolgt die Druckmessung unabhängig von Verzweigungen der Gasleitung, i.e. unabhängig von einer Anzahl von Gaskochstellen des Haushaltsgeräts.

Das Haushaltsgerät kann eine Arbeitsplatte aufweisen, unterhalb welcher die Gasleitung und die Ventileinrichtung angeordnet sind, und oberhalb welcher die mindestens eine Gaskochstelle angeordnet ist. Insbesondere können ein oder mehrere Gasbrenner auf der Arbeitsplatte angeordnet sein. Das Druckmessgerät kann unterhalb der Arbeitsplatte angeordnet sein.

Vorzugsweise ist das Druckmessgerät abströmseitig von einem Gasbehälter für das Brenngas, insbesondere abströmseitig von einem Druckminderer an einer Gasflasche, angeordnet. Vorzugsweise kann der Druckminderer den Druck des Brenngases von bis zu mehreren Hundert bar in dem Druckbehälter auf einen Druck von bis zu 2 bar reduzieren. Infolge dessen kann in der Gasleitung ein Überdruck des Brenngases von bis zu 150 mbar herrschen. Überdruck bezieht sich auf eine Druckdifferenz zwischen dem Atmosphärendruck (oder einem Druck der Umgebungsluft) und dem Druck des Brenngases jeweils in dem Gasbehälter, dem Druckminderer oder der Gasleitung.

Insbesondere ist das Druckmessgerät anströmseitig von oder an dem Gasanschluss angeordnet. Die Anordnung des Druckmessgeräts außerhalb des Haushaltsgeräts kann Platz innerhalb des Haushaltsgeräts sparen. Diese Anordnung kann vorteilhaft sein, falls ein Raum innerhalb des Haushaltsgeräts, insbesondere unterhalb einer Arbeitsplatte, für ein Unterbringen des Druckmessgeräts nicht ausreicht.

Gemäß einer weiteren Ausführungsform weist das Druckmessgerät einen elektronischen Drucksensor zum Messen des Drucks in der Hauptgasleitung auf.

Vorzugsweise kann der elektronische Drucksensor elektronische Signale in Abhängigkeit von dem gemessenen Druck erzeugen. Beispielsweise kann der elektronische Drucksensor eine auf eine Auflage wirkende Kraft messen, um daraus den Druck als die Kraft pro Fläche zu ermitteln. Der elektronische Drucksensor kann, zum Beispiel, einen piezoelektrischen Sensor, einen Dehnungsmessstreifen und/oder eine Druckwaage umfassen.

Gemäß einer weiteren Ausführungsform ist das Druckmessgerät zum Messen des Drucks in der Hauptgasleitung in Abhängigkeit von einer Abweichung eines Druckmesselements, insbesondere eines Dehnungssensors, von einer Ruhestellung eingerichtet.

Das Druckmessgerät kann ein oder mehrere Druckmesselemente, zum Beispiel ein Kolbenmanometer, ein Flüssigkeitsmanometer (e.g. mit Quecksilber), Rohrfeder-Manometer, Plattenfeder-Manometer, Kapselfeder-Manometer und/oder einen Barometer umfassen. Der Druck kann beispielsweise anhand einer Höhe einer Flüssigkeitssäule, einer Auslenkung einer Feder und/oder einer Verformung einer Membran bestimmt werden. Der Dehnungssensor kann als ein Dehnungsmessstreifen ausgebildet sein, der elastisch dehnbar ausgebildet ist, und dessen elektrischer Widerstand je nach Dehnung variiert.

Gemäß einer weiteren Ausführungsform umfasst das Haushaltsgerät eine Messkammer, welche an der Hauptgasleitung angeschlossen ist. Das Druckmessgerät ist zum Messen des Drucks in der Messkammer eingerichtet.

Beispielsweise ist die Messkammer als eine Aufweitung in der Gasleitung des Haushaltsgeräts ausgebildet. Vorzugsweise herrscht in der Messkammer ein gleicher Druck wie in der Gasleitung. Ein elektronischer Drucksensor und/oder ein Druckmesselement können in der Messkammer angeordnet sein, um den Druck in der Messkammer zu messen. Die Messkammer kann zum Beispiel quaderförmig oder zylindrisch, z. B. mit einer zu der Gasleitung parallelen Symmetrieachse, ausgebildet sein.

Gemäß einer weiteren Ausführungsform ist die Anzeigeeinrichtung mechanisch mit dem Druckmessgerät gekoppelt.

Die Anzeigeeinrichtung kann insbesondere elektrische Signale in Abhängigkeit von dem von dem Druckmesser gemessenen Druck empfangen. Insbesondere kann die Anzeigeeinrichtung einen Bildschirm, ein TFT-Display, LED-Display, LCD-Display und/oder eine sonstige elektrische Display-Einheit umfassen, um den gemessenen Druck anzuzeigen.

Alternativ oder zusätzlich kann die Anzeigeeinrichtung den gemessenen Druck in analoger Weise anzeigen, z.B. mittels eines Zeigers, einer Drehscheibe, einer Flüssigkeitssäule, etc. in Kombination mit einer Skala. Zum Beispiel kann die Anzeigeeinrichtung eine Tafel und einen Zeiger aufweisen, wobei der Zeiger schwenkbar an der Tafel montiert ist. Das Druckmessgerät könnte ein variables Drehmoment in Abhängigkeit von dem gemessenen Druck erzeugen und auf die Anzeigeeinrichtung übertragen. Der Zeiger könnte in Abhängigkeit von dem gemessenen Druck unterschiedlich ausgelenkt werden, und die entsprechenden Positionen könnten auf der Tafel in Form einer Skala markiert sein.
Die Lage einer Flüssigkeitssäule, eine Verformung einer Membran, eine Ausdehnung oder Auslenkung eines sonstigen Druckmesselements könnte mechanisch auf die Anzeigeeinrichtung übertragen werden.
Gemäß einer weiteren Ausführungsform ist die Anzeigeeinrichtung zum Anzeigen eines Warnsignals eingerichtet, wenn der von dem Druckmessgerät gemessene Druck unterhalb eines voreinstellbaren Druckschwellenwertes fällt.
Das Warnsignal kann in Form einer Warnlampe, eines Warngeräusches, einer elektrischen Warnanzeige und/oder eines mechanischen Warnmechanismus ausgegeben werden. Das Warnsignal kann insbesondere dazu dienen, eine das Haushaltsgerät bedienende Person rechtzeitig oder vorzeitig über einen niedrigen Füllstand eines Gasbehälters, insbesondere einer Gasflasche, zu informieren. Der voreinstellbare Druckschwellenwert kann vom Hersteller oder von der das Haushaltsgerät bedienenden Person eingestellt werden. Der Druckschwellenwert beträgt beispielsweise 50% oder 80% eines mittleren Druckwertes bei vollem Gasbehälter. Folglich kann das Warnsignal einen Austausch des Gasbehälters empfehlen.

Das Haushaltsgerät umfasst eine Steuereinrichtung zum Erzeugen eines Anzeigesignals in Abhängigkeit von einem zeitlichen Verlauf des gemessenen Drucks (p(t)), wobei die Anzeigeeinrichtung zum Anzeigen des Anzeigesignals als Warnsignal eingerichtet ist, wenn der gemessene Druck zeitlich stärker als um eine voreinstellbare Steigung abfällt. Es wird ein Warnsignal ausgegeben werden, falls der Druck innerhalb eines vorgegebenen Zeitintervalls stärker als um eine vorgegebene Steigung abfällt. Ein starker Druckabfall innerhalb des vorgegebenen Zeitintervalls kann einen niedrigen Füllstand in dem Gasbehälter oder der Gasflasche hindeuten.

Der gemessene Druck kann aufgrund von äußeren Einflüssen, z.B. Wetterverhältnissen, spontanen Schwankungen unterliegen. Vorzugsweise ist die vorgegebene Steigung größer als zu erwartende spontane Schwankungen des gemessenen Drucks innerhalb des Zeitintervalls zu wählen. Die zu erwartenden spontanen Schwankungen des gemessenen Drucks können empirisch innerhalb des Zeitintervalls bestimmt sein.

Beispielsweise beträgt die vorgegebene Steigung 10 mbar innerhalb eines Zeitintervalls von einer Stunde. Ferner kann die vorgegebene Steigung relativ angegeben sein, d.h. durch einen Druckabfall um einem bestimmten Prozentsatz innerhalb des vorgegebenen Zeitintervalls.

Die Steuereinrichtung kann insbesondere eingerichtet sein, elektronische Signale zu erzeugen. Die Steuereinrichtung kann ferner eine Recheneinheit umfassen, die auf der Basis eines zeitlichen Verlaufs des gemessenen Drucks die Steigung des Drucks innerhalb des vorgegebenen Zeitintervalls ermittelt.

Gemäß einer weiteren Ausführungsform umfasst das Haushaltsgerät ferner einen Gasanschluss zum Zuführen des Brenngases zu dem Haushaltsgerät, eine erste Gaskochstelle und eine zweite Gaskochstelle, eine erste Ventileinrichtung und eine zweite Ventileinrichtung. Die erste Ventileinrichtung ist zum Steuern einer Zufuhr des Brenngases zu der ersten Gaskochstelle eingerichtet. Die zweite Ventileinrichtung ist zum Steuern einer Zufuhr des Brenngases zu der zweiten Gaskochstelle eingerichtet. Das Druckmessgerät ist zum Messen eines Drucks des Brenngases in der Hauptgasleitung zwischen dem Gasanschluss und den Ventileinrichtungen eingerichtet.

Das Haushaltsgerät kann mehrere Gaskochstellen sowie mehrere Ventileinrichtungen aufweisen, wobei jede der mehreren Ventileinrichtungen jeweils einer der mehreren Gaskochstellen zugeordnet ist. Die Gasleitung kann eine Hauptgasleitung und mehrere Gaszuleitungen umfassen, wobei die Gaszuleitungen jeweils eine der mehreren Gaskochstellen mit der Hauptgasleitung verbinden. Die Ventileinrichtungen können jeweils zwischen der zugehörigen Gaszuleitung und der Hauptgasleitung ausgebildet sein. Das Druckmessgerät misst den Druck des Brenngases in der Hauptgasleitung, folglich unabhängig von den Gaszuleitungen und/oder den Gaskochstellen.

Gemäß einem zweiten Aspekt der Erfindung wird eine Anordnung vorgeschlagen. Die Anordnung umfasst ein oben beschriebenes Haushaltsgerät und einen Gasbehälter, insbesondere eine Gasflasche, zum Aufbewahren und Bereitstellen eines Brenngases.
Der Gasbehälter kann eingerichtet sein, das Brenngas, welches dem Haushaltsgerät zugeführt wird, unter einem gegenüber einem Atmosphärendruck erhöhten Druck zu verschließen, aufzubewahren und/oder bereitzustellen. Der Gasbehälter kann als ein Druckbehälter und insbesondere als eine Gasflasche ausgebildet sein. Ferner kann ein Druckminderer zwischen dem Gasbehälter und dem Haushaltsgerät angeschlossen sein, der den Druck des dem Haushaltsgerät zugeführten Brenngases auf ein dem Atmosphärendruck vergleichbares Niveau verringert. Beispielsweise kann der Druckminderer den Überdruck des Brenngases auf 50 mbar verringern.
Der Gasbehälter kann insbesondere eingerichtet sein, Butan, Propan und/oder Erdgas aufzubewahren und bereitzustellen. Der Druck des Brenngases in dem Gasbehälter kann bis zu 10³ bar betragen.
Gemäß einem dritten Aspekt der Erfindung wird ein Verfahren zum Betreiben eines Haushaltsgeräts mit mindestens einer Gaskochstelle und einem Gasanschluss vorgeschlagen. Das Verfahren umfasst: Messen eines Drucks eines dem Haushaltsgerät zugeführten Brenngases zwischen der mindestens einen Gaskochstelle und dem Gasanschluss; Vergleichen des gemessenen Drucks mit einem Druckschwellenwert; Anzeigen, falls der gemessene Druck den Druckschwellenwert unterschreitet; Ermitteln einer zeitlichen Änderung des gemessenen Drucks; Vergleichen der zeitlichen Änderung mit einer vorgegebenen Steigung; und Anzeigen eines Warnsignals, falls die zeitliche Änderung die vorgegebene Steigung unterschreitet.
Die für die vorgeschlagene Vorrichtung beschriebenen Ausführungsformen und Merkmale gelten für das vorgeschlagene Verfahren entsprechend.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Figur 1 zeigt eine schematische Ansicht einer ersten Ausführungsform eines Haushaltsgeräts;
Figur 2 zeigt eine schematische Ansicht einer zweiten Ausführungsform eines Haushaltsgeräts;
Figur 3 zeigt eine schematische Ansicht einer weiteren Ausführungsform eines Haushaltsgeräts;
Figur 4 zeigt schematische Ansichten von zwei Ausführungsformen eines Druckmessgeräts;
Figur 5 zeigt eine schematische Ansicht einer weiteren Ausführungsform eines Druckmessgeräts; und
Figur 6 zeigt ein Beispiel eines zeitlichen Verlaufs eines gemessenen Drucks.
In den Figuren sind gleiche oder funktionsgleiche Elemente mit denselben Bezugszeichen versehen worden, sofern nichts anderes angegeben ist.

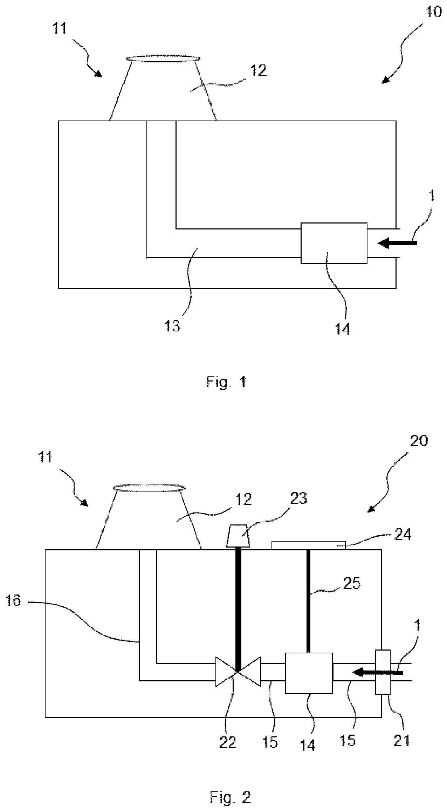

Figur 1 zeigt eine schematische Ansicht einer ersten Ausführungsform eines Haushaltsgeräts 10.
Das Haushaltsgerät 10 umfasst eine Gaskochstelle 11 mit einem Gasbrenner 12, eine Rohrleitung 13 zum Zuführen eines Brenngases 1 zu dem Gasbrenner 12 und ein Druckmessgerät 14.
Der Gasbrenner 12 ist zum Erwärmen von Gargut durch Entzünden eines entflammbaren Gasgemisches aus dem Brenngas 1 und Sauerstoff oder Umgebungsluft geeignet. Das Brenngas 1 wird von einem externen Gasbehälter, die als eine Gasflasche ausgebildet ist, dem Haushaltsgerät 10 zugeführt. Die Gasflasche kann das Brenngas 1, je nach Füllstand, unter einem Druck von bis zu 10³ bar unter Verschluss halten. Ein Druckminderer, der an die Gasflasche angeschlossen ist, verringert den Druck des aus der Gasflasche austretenden Brenngases 1 auf einen Überdruck von bis zu 200 mbar. Der Überdruck gibt eine Druckdifferenz des Brenngases 1 zu einem Atmosphärendruck oder einem Druck von 1 bar an. Das Brenngas 1 wird dem Haushaltsgerät 10 zugeführt.

Das Druckmessgerät 14 misst den Druck des dem Haushaltsgerät 10 zugeführten Brenngases 1. Das Brenngas 1 fließt in der Gasleitung 13 durch das Druckmessgerät 14 hindurch zu dem Gasbrenner 12. Die Gasleitung 13 kann eine Hauptgasleitung und eine oder mehrere Gaszuleitungen umfassen.

Figur 2 zeigt eine schematische Ansicht einer zweiten Ausführungsform eines Haushaltsgeräts 20.

Das Haushaltsgerät 20 umfasst die Gaskochstelle 11 mit dem Gasbrenner 12, eine Hauptgasleitung 15, eine Gaszuleitung 16, das Druckmessgerät 14, einen Gasanschluss 21 und ein Regelventil 22. Das Brenngas 1 wird durch den Gasanschluss 21 dem Haushaltsgerät 20 zugeführt. Ein Bedienknebel 23 ist mechanisch mit dem Regelventil 22 gekoppelt, um eine Durchflussmenge des Brenngases 1 zu dem Gasbrenner 12 zu steuern.

Das Druckmessgerät 14 ist in der Hauptgasleitung 15 angeordnet und misst den Druck des dem Haushaltsgerät 20 zugeführten Brenngases 1. Das Druckmessgerät 14 umfasst einen elektronischen Drucksensor oder eine Steuereinrichtung zum Erzeugen von elektrischen Signalen in Abhängigkeit von dem gemessenen Druck des Brenngases 1. Das Druckmessgerät 14 leitet die elektrischen Signale über eine Signalleitung 25 an ein Display 24. Das Display 24 umfasst einen Bildschirm, der als eine TFT-Anzeige, LED-Anzeige oder LCD-Anzeige ausgebildet ist.

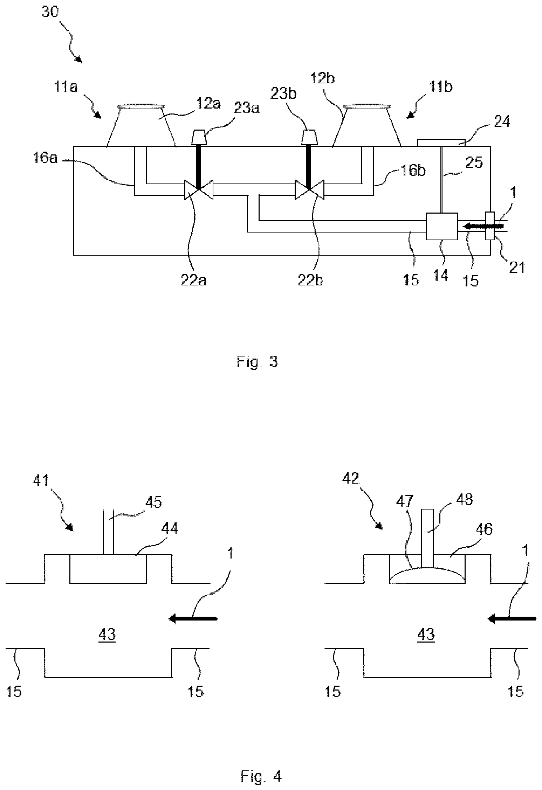

Figur 3 zeigt eine schematische Ansicht einer dritten Ausführungsform eines Haushaltsgeräts 30.

Das Haushaltsgerät 30 umfasst eine erste Gaskochstelle 11a mit einem ersten Gasbrenner 12a, eine zweite Gaskochstelle 11b mit einem zweiten Gasbrenner 12b, einen Gasanschluss 21, eine Hauptgasleitung 15, das Druckmessgerät 14, ein erstes und zweites Regelventil 22a, 22b und eine erste Gaszuleitung 16a und eine zweite Gaszuleitung 16b.

Das Druckmessgerät 14 ist über die Signalleitung 25 mit dem Display 24 verbunden. Ein erster Bedienknebel 23a ist mit dem ersten Regelventil 22a, und ein zweiter Bedienknebel 23b ist mit dem zweiten Regelventil 22b mechanisch gekoppelt. Die Bedienknebel 23a, 23b ermöglichen einer das Haushaltsgerät 30 bedienenden Person eine manuelle Steuerung der Regelventile 22a, 22b zur Steuerung einer Flussmenge des Brenngases 1 zu dem jeweiligen Gasbrenner 12a, 12b.

Der Druck des dem Haushaltsgerät 30 zugeführten Brenngases 1 wird von dem Druckmessgerät 14 gemessen. Der gemessene Druck wird auf dem Display 24 angezeigt. Insbesondere wird ein Warnsignal ausgegeben, wenn der gemessene Druck unter einen vorgegebenen Druckschwellenwert, z.B. einen Überdruck von 25 mbar, oder um einen vorgegebenen Druckabfall innerhalb eines vorgegebenen Zeitintervalls, z.B. 10 mbar innerhalb von 60 Minuten, abfällt. Das Warnsignal kann als eine Warnmeldung auf dem Display 24 ausgegeben werden.

Figur 4 zeigt schematische Ansichten von zwei Ausführungsformen eines Druckmessgeräts 41, 42.

Das Druckmessgerät 41 umfasst eine Messkammer 43, die als ein Hohlraum mit einem größeren Querschnitt als die Hauptgasleitung 15 ausgebildet ist. Optional kann die Messkammer 43 parallel zu der Hauptgasleitung 15 oder als eine Abzweigung von der Hauptgasleitung 15 ausgebildet sein. Das Druckmessgerät 41 weist einen elektronischen Drucksensor 44 auf, der den Druck des zugeführten Brenngases 1 in der Messkammer 43 erfasst. Der elektronische Drucksensor 44 erzeugt elektrische Signale in Abhängigkeit von dem gemessenen Druck und leitet sie über eine Signalleitung 45 an eine Anzeigeeinrichtung, zum Beispiel ein Display, weiter.

Das Druckmessgerät 42 weist die Messkammer 43 mit einer Zwischenkammer 46 auf. In der Zwischenkammer 46 ist eine Membran 47 oder ein Diaphragma angeordnet. In Abhängigkeit von dem Druck des zugeführten Brenngases 1 verformt sich die Membran 47. Ein Zeiger 48, der an der Membran 47 angeschlossen ist, kann der Verformung der Membran 47 entsprechend vertikal bewegt werden. Beispielsweise kann der Zeiger 48 einen Tiefstand erreichen, falls der Druck des Brenngases 1 unter einen vorgegebenen Wert sinkt, welcher als ein Warnsignal für einen niedrigen Füllstand der Gasflasche oder einen baldigen Austausch der Gasflasche interpretiert wird.

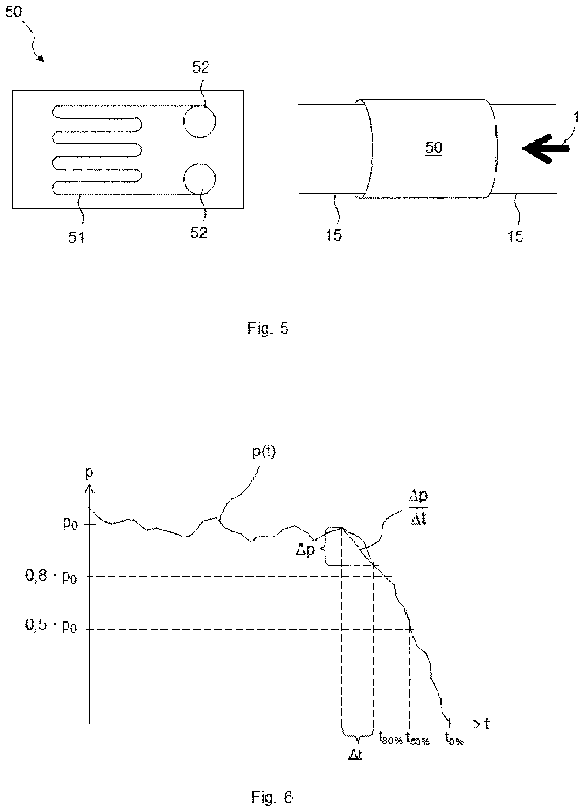

Figur 5 zeigt eine schematische Ansicht einer weiteren Ausführungsform eines Druckmessgeräts 50.

Das Druckmessgerät 50 umfasst einen Dehnungsmessstreifen 51 mit zwei Kontakten 52, die an einer elastischen Plane 53 angeordnet sind. Das Druckmessgerät 50 wird an einer elastischen Stelle der Hauptgasleitung 15 um die Hauptgasleitung 15 gewickelt. Alternativ kann das Druckmessgerät 50 einen Teil einer Mantelfläche der Hauptgasleitung 15 ersetzen und luftdicht mit der Hauptgasleitung 15 verbunden sein.

Bei einem hohen Druck dehnt sich das Druckmessgerät 50 und somit der Dehnungsmesstreifen 51 aus. Dadurch erhöht sich der Abstand zwischen den Kontakten 52, und ein elektrischer Widerstand des Druckmessgerätes 50 steigt entsprechend. Bei einem niedrigen Druck kann sich das Druckmessgerät 50 zusammenziehen, so dass der Abstand zwischen den Kontakten 52 abnimmt. Dadurch wird der elektrische Widerstand reduziert. Insgesamt ändert sich der elektrische Widerstand des Druckmessgeräts 50 in Abhängigkeit des auf die Fläche des Druckmessgeräts 50 wirkenden Drucks des zugeführten Brenngases 1 in der Hauptgasleitung 15.

Figur 6 zeigt ein Beispiel eines zeitlichen Verlaufs eines gemessenen Drucks p(t).

In Figur 6 ist der von einem Druckmessgerät 41, 42, 50 eines Haushaltsgeräts 10, 20, 30 gemessene Druck p gegen Zeit t beispielhaft aufgetragen. Die so entstehende Kurve p(t) ist als ein zeitlicher Verlauf des gemessenen Drucks des Brenngases 1 zu verstehen. p₀ kennzeichnet einen mittleren Wert des gemessenen Drucks bei vollem Gasbehälter oder bei voller Gasflasche. Der gemessene Druck unterliegt einer Fluktuation, die von äußeren Einflüssen, zum Beispiel Wetterverhältnissen, herrühren kann. t_{80%} und t_{50%} kennzeichnen jeweils den Zeitpunkt, an dem der gemessene Druck auf 80% von p₀ und 50% von p₀ sinkt. t_{0%} kennzeichnet den Zeitpunkt des vollständigen Verbrauchs des Brenngases 1.

Das Druckmessgerät 41, 42, 50 leitet den gemessenen Druck an das Display 24 weiter. Das Display 24 des Haushaltsgeräts 10, 20, 30 kann beim Erreichen von 80% des erwarteten Druckwertes p₀ bzw. 50% des erwarteten Druckwertes p₀ ein Warnsignal ausgeben, das einen baldigen Austausch des Gasbehälters empfiehlt oder einen niedrigen Füllstand des Gasbehälters ankündigt.
Alternativ oder zusätzlich kann das Haushaltsgerät mit einer Steuereinrichtung ausgestattet sein, die einen Gradienten des zeitlichen Druckverlaufs p ausrechnet. Insbesondere kann ein Zeitintervall Δt vorgegeben sein, innerhalb welchem eine Druckdifferenz Δp ausgerechnet wird. Der Quotient Δp/Δt entspricht einem Druckgradienten des zeitlichen Verlaufs des gemessenen Drucks. Falls der Betrag des Druckgradienten einen vorgegebenen Druckabfall übersteigt, kann die Anzeigeeinrichtung des Haushaltsgeräts ein Warnsignal ausgeben, um einen baldigen Austausch des Gasbehälters zu empfehlen oder einen niedrigen Füllstand des Gasbehälters anzukündigen.
Das vorgeschlagene Haushaltsgerät sowie das vorgeschlagene Verfahren ermöglicht ein frühzeitiges Erkennen eines niedrigen Füllstands eines Gasbehälters für das Haushaltsgerät. Dadurch kann ein unerwünschter Betriebsausfall des Haushaltsgeräts reduziert oder vermieden werden.

### Verwendete Bezugszeichen:

- 1: Brenngas
- 10: Haushaltsgerät
- 11, 11a, 11b: Gaskochstelle
- 12, 12a, 12b: Gasbrenner
- 13: Gasleitung
- 14: Druckmessgerät
- 15: Hauptgasleitung
- 16, 16a 16b: Gaszuleitung
- 20: Haushaltsgerät
- 21: Gasanschluss
- 22: Regelventil
- 23: Bedienknebel
- 24: Display
- 25: Signalleitung
- 30: Haushaltsgerät
- 41, 42: Druckmessgerät
- 43: Messkammer
- 44: elektronischer Drucksensor
- 45: Signalleitung
- 46: Zwischenkammer
- 47: Membran
- 48: Zeiger
- 50: Druckmessgerät
- 51: Dehnungsmessstreifen
- 52: Kontakt

- p, p(t): Druck
- p₀: mittlerer Druckwert
- t: Zeit
- t_{0%}, t_{50%}, t_{80%}: Zeitpunkt
- Δp: Druckdifferenz
- Δt: Zeitintervall

## Patentansprüche

1. Haushaltsgerät (10), insbesondere ein Gaskochfeld, umfassend mindestens eine Gaskochstelle (11) zum Erwärmen von Gargut mit Hilfe eines Brenngases (1);
eine Gasleitung (13) zum Zuführen des Brenngases (1) zu der mindestens einen Gaskochstelle (11);
ein Druckmessgerät (14) zum Messen eines Drucks des Brenngases (1) in der Gasleitung (13);
eine Anzeigeeinrichtung (24) zum Anzeigen des von dem Druckmessgerät (14) gemessenen Drucks in der Gasleitung (13), wenn der von dem Druckmessgerät (14) gemessene Druck einen voreinstellbaren Druckschwellenwert unterschreitet;
**dadurch gekennzeichnet dass**, das Haushaltsgerät eine Steuereinrichtung zum Erzeugen eines Anzeigesignals in Abhängigkeit von einem zeitlichen Verlauf des gemessenen Drucks (p(t)) umfasst, wobei die Anzeigeeinrichtung (24) zum Anzeigen des Anzeigesignals als Warnsignal eingerichtet ist, wenn der gemessene Druck zeitlich stärker als um eine voreinstellbare Steigung abfällt.

2. Haushaltsgerät nach Anspruch 1, ferner umfassend
einen Gasanschluss (21) zum Zuführen des Brenngases (1) zum Haushaltsgerät (20); und
eine Ventileinrichtung (22) zum Steuern einer Zufuhr des Brenngases (1) zu der mindestens einen Gaskochstelle (11),
wobei das Druckmessgerät (14) zum Messen des Drucks in der Gasleitung (13) zwischen dem Gasanschluss (21) und der Ventileinrichtung (22) eingerichtet ist.

3. Haushaltsgerät nach einem der Ansprüche 1 oder 2, **dadurch gekennzeichnet, dass** das Druckmessgerät (41) einen elektronischen Drucksensor (44) zum Messen des Drucks in einer Hauptgasleitung (15) aufweist.

4. Haushaltsgerät nach einem der Ansprüche 1 - 3, **dadurch gekennzeichnet, dass** das Druckmessgerät (42) zum Messen des Drucks in der Hauptgasleitung (15) in Abhängigkeit von einer Abweichung eines Druckmesselements (47), insbesondere eines Dehnungssensors (50), von einer Ruhestellung eingerichtet ist.

5. Haushaltsgerät nach einem der Ansprüche 1 - 4, ferner umfassend
eine Messkammer (43) angeschlossen an der Hauptgasleitung (15),
wobei das Druckmessgerät (41, 42) zum Messen des Drucks in der Messkammer (43) eingerichtet ist.

6. Haushaltsgerät nach einem der vorhergehenden Ansprüche, **dadurch**
**gekennzeichnet, dass**
die Anzeigeeinrichtung (24) mechanisch mit dem Druckmessgerät (14) gekoppelt ist.

7. Haushaltsgerät nach einem der vorhergehenden Ansprüche, **dadurch**
**gekennzeichnet, dass**
die Anzeigeeinrichtung (24) zum Anzeigen eines Warnsignals eingerichtet ist, wenn der von dem Druckmessgerät (14) gemessene Druck unterhalb eines voreinstellbaren Druckschwellenwertes fällt.

8. Haushaltsgerät nach einem der vorhergehenden Ansprüche, umfassend
einen Gasanschluss (21) zum Zuführen des Brenngases (1) zu dem Haushaltsgerät (20);
eine erste Gaskochstelle (11a) und eine zweite Gaskochstelle (11b);
eine erste Ventileinrichtung (22a) zum Steuern einer Zufuhr des Brenngases (1) zu der ersten Gaskochstelle (11a); und
eine zweite Ventileinrichtung (22b) zum Steuern einer Zufuhr des Brenngases (1) zu der zweiten Gaskochstelle (11b),
wobei das Druckmessgerät (14) zum Messen des Drucks des Brenngases (1) in der Hauptgasleitung (15) zwischen dem Gasanschluss (21) und den Ventileinrichtungen (22a, 22b) eingerichtet ist.

9. Anordnung, umfassend
ein Haushaltsgerät (10) nach einem der vorhergehenden Ansprüche; und einen Gasbehälter, insbesondere eine Gasflasche, zum Aufbewahren und Bereitstellen eines Brenngases (1) für das Haushaltsgerät (10).

10. Verfahren zum Betreiben eines Haushaltsgeräts (10) nach einem der vorhergehenden Ansprüche, mit mindestens einer Gaskochstelle (11) und einem Gasanschluss (21), umfassend Messen eines Drucks eines dem Haushaltsgerät (10) zugeführten Brenngases (1) zwischen der mindestens einen Gaskochstelle (11) und dem Gasanschluss (21);
Vergleichen des gemessenen Drucks mit einem Druckschwellenwert;
Anzeigen, falls der gemessene Druck den Druckschwellenwert unterschreitet;
Ermitteln einer zeitlichen Änderung des gemessenen Drucks;
Vergleichen der zeitlichen Änderung mit einer vorgegebenen Steigung; und
Anzeigen eines Warnsignals, falls die zeitliche Änderung die vorgegebene Steigung unterschreitet.

## Claims

1. Household appliance (10), in particular gas hob, comprising
at least one gas hotplate (11) for heating food with the aid of a fuel gas (1);
a gas line (13) for supplying the fuel gas (1) to the at least one gas hotplate (11);
a pressure measuring device (14) for measuring a pressure of the fuel gas (1) in the gas line (13);
a display facility (24) for displaying the pressure measured by the pressure measuring device (14) in the gas line (13) if the pressure measured by the pressure measuring device (14) does not reach a presettable pressure threshold value;
**characterised in that** the household appliance comprises a control facility for generating a display signal as a function of a temporal course of the measured pressure (p(t)), wherein the display facility (24) is designed to display the display signal as a warning signal if the measured pressure drops over time by more than a presettable gradient.

2. Household appliance according to claim 1, further comprising
a gas connection (21) for supplying the fuel gas (1) to the household appliance (20); and
a valve facility (22) for controlling a supply of the fuel gas (1) to the at least one gas hotplate (11),
wherein the pressure measuring device (14) is designed to measure the pressure in the gas line (13) between the gas connection (21) and the valve facility (22).

3. Household appliance according to one of claims 1 or 2, **characterised in that** the pressure measuring device (41) has an electronic pressure sensor (44) for measuring the pressure in a main gas line (15).

4. Household appliance according to one of claims 1-3, **characterised in that** the pressure measuring device (42) is designed to measure the pressure in the main gas line (15) as a function of a deviation of a pressure measuring element (47), in particular of an expansion sensor (50), from a rest position.

5. Household appliance according to one of claims 1-4, further comprising
a measuring chamber (43) connected to the main gas line (15), wherein the pressure measuring device (41, 42) is designed to measure the pressure in the measuring chamber (43).

6. Household appliance according to one of the preceding claims,
**characterised in that**
the display facility (24) is coupled mechanically to the pressure measuring device (14).

7. Household appliance according to one of the preceding claims,
**characterised in that**
the display facility (24) is designed to display a warning signal if the pressure measured by the pressuring measuring device (14) does not reach a presettable pressure threshold value.

8. Household appliance according to one of the preceding claims, comprising
a gas connection (21) for supplying the fuel gas (1) to the household appliance (20);
a first gas hotplate (11a) and a second gas hotplate (11b);
a first valve facility (22a) for controlling a supply of the fuel gas (1) to the first gas hotplate (11a), and
a second valve facility (22b) for controlling a supply of the fuel gas (1) to the second gas hotplate (11b),
wherein the pressure measuring device (14) is designed to measure the pressure of the fuel gas (1) in the main gas line (15) between the gas connection (21) and the valve facilities (22a, 22b).

9. Arrangement comprising
a household appliance (10) according to one of the preceding claims; and
a gas container, in particular a gas bottle, for storing and providing a fuel gas (1) for the household appliance (10).

10. Method for operating a household appliance (10) according to one of the preceding claims, having at least one gas hotplate (11) and a gas connection (21), comprising measuring a pressure of a fuel gas (1) supplied to the household appliance (10) between the at least one gas hotplate (11) and the gas connection (21);
comparing the measured pressure with a pressure threshold value;
displaying if the measured pressure does not reach the pressure threshold value;
determining a temporal change in the measured pressure;
comparing the temporal change with a predetermined gradient; and
displaying a warning signal if the temporal change does not reach the predetermined gradient.

## Revendications

1. Appareil électroménager (10), en particulier une table de cuisson à gaz, comprenant au moins un poste de cuisson à gaz (11) destiné à chauffer un aliment à cuire à l'aide d'un gaz de combustion (1) ;
une conduite de gaz (13) destinée à l'approvisionnement de l'au moins un poste de cuisson à gaz (11) en gaz de combustion (1) ;
un appareil de mesure de pression (14) destiné à la mesure d'une pression du gaz de combustion (1) dans la conduite de gaz (13) ;
un dispositif d'affichage (24) destiné à l'affichage de la pression mesurée par l'appareil de mesure de pression (14) dans la conduite de gaz (13) lorsque la pression mesurée par l'appareil de mesure de pression (14) passe en dessous d'une valeur de seuil de pression préréglable ;
**caractérisé en ce que** l'appareil électroménager comprend un dispositif de commande destiné à la génération d'un signal d'affichage en fonction d'une évolution dans le temps de la pression mesurée (p(t)),
dans lequel le dispositif d'affichage (24) destiné à l'affichage du signal d'affichage est établi en tant que signal d'avertissement lorsque la pression mesurée chute plus fortement dans le temps qu'une pente préréglable.

2. Appareil électroménager selon la revendication 1, comprenant en outre
un raccord de gaz (21) destiné à l'approvisionnement de l'appareil électroménager (20) en gaz de combustion (1) ; et
un dispositif à vanne (22) destiné à la commande d'un approvisionnement de l'au moins poste de cuisson à gaz (11) en gaz de combustion (1) ;
dans lequel l'appareil de mesure (14) destiné à la mesure de la pression dans la conduite de gaz (13) est établi entre le raccord de gaz (21) et le dispositif à vanne (22).

3. Appareil électroménager selon l'une des revendications 1 ou 2, **caractérisé en ce que** l'appareil de mesure de pression (41) présente un capteur de pression électronique (44) destiné à la mesure de la pression dans une conduite de gaz principale (15).

4. Appareil électroménager selon l'une des revendications 1 à 3, **caractérisé en ce que** l'appareil de mesure de pression (42) destiné à la mesure de la pression dans la conduite de gaz principale (15) est établi en fonction d'un écart d'un élément de mesure de pression (47), en particulier d'un capteur d'allongement (50), par rapport à une position de repos.

5. Appareil électroménager selon l'une des revendications 1 à 4, comprenant en outre une chambre de mesure (43) raccordée à la conduite de gaz principale (15), dans lequel l'appareil de mesure de pression (41, 42) destiné à la mesure de la pression est établi dans la chambre de mesure (43).

6. Appareil électroménager selon l'une des revendications précédentes, **caractérisé en ce que** le dispositif d'affichage (24) est couplé mécaniquement à l'appareil de mesure de pression (14).

7. Appareil électroménager selon l'une des revendications précédentes, **caractérisé en ce que** le dispositif d'affichage (24) destiné à l'affichage d'un signal d'avertissement est établi lorsque la pression mesurée par l'appareil de mesure de pression (14) tombe en dessous d'une valeur de seuil de pression préréglable.

8. Appareil électroménager selon l'une des revendications précédentes, comprenant un raccord de gaz (21) destiné à l'approvisionnement de l'appareil électroménager (20) en gaz de combustion (1) ;
un premier poste de cuisson à gaz (11a) et un second poste de cuisson à gaz (11b) ;
un premier dispositif à vanne (22a) destiné à la commande d'un approvisionnement du premier poste de cuisson à gaz (11a) en gaz de combustion (1) ; et
un second dispositif à vanne (22b) destiné à la commande d'un approvisionnement du second poste de cuisson à gaz (11b) en gaz de combustion (1) ;
dans lequel l'appareil de mesure (14) destiné à la mesure de la pression du gaz de combustion (1) est établi dans la conduite de gaz principale (15) entre le raccord de gaz (21) et les dispositifs à vanne (22a, 22b).

9. Agencement, comprenant
un appareil électroménager (10) selon l'une des revendications précédentes ; et
un récipient de gaz, en particulier une bouteille de gaz, destiné à la conservation et à la mise à disposition d'un gaz de combustion (1) pour l'appareil électroménager (10).

10. Procédé destiné au fonctionnement d'un appareil électroménager (10) selon l'une des revendications précédentes, avec au moins un poste de cuisson à gaz (11) et un raccord de gaz (21), comprenant la mesure d'une pression d'un gaz de combustion (1) approvisionné à l'appareil électroménager (10) entre l'au moins un poste de cuisson à gaz (11) et le raccord de gaz (21) ;
la comparaison de la pression mesurée avec une valeur de seuil de pression ;
l'affichage, dans le cas où la pression mesurée n'atteint pas la valeur de seuil de pression ;
la détermination d'une modification dans le temps de la pression mesurée ;
la comparaison de la modification dans le temps avec une pente prédéfinie ; et
l'affichage d'un signal d'avertissement, dans le cas où la modification dans le temps tombe en dessous de la pente prédéfinie.
